# EUROPEAN PATENT SPECIFICATION

(11) **EP 3 623 182 B1**
(45) Date of publication and mention of the grant of the patent: **26.02.2025**
(21) Application number: 18193713.7
(22) Date of filing: 11.09.2018
(51) Int. Cl.: F16K 11/16

(54) **HANDLE POSITION DETECTION SYSTEM**
GRIFFPOSITIONDETEKTIONSSYSTEM
SYSTÈME DE DÉTECTION DE POSITION DE POIGNÉE

(43) Date of publication of application: 18.03.2020
(73) Proprietor: ZF CV Systems Europe BV, 1170 Brussels (BE)
(72) Inventor: KOPCIUCH, Michal, 52-238 Wroclaw (PL)
(74) Representative: Ohlendorf, Henrike

(56) References cited:
- EP-A1- 1 712 380
- EP-A1- 2 177 381
- EP-A1- 2 263 892
- EP-A1- 2 540 537
- DE-A1- 102011 051 504
- DE-B3- 102005 019 479

## Description

The invention relates to a valve device for controlling a pneumatic trailer air suspension system and a method for controlling an air suspension system.

Valve devices of the aforementioned type are used to regulate the air supply to pneumatic cushioning bellows of an air cushioning system for a truck. Increasing and decreasing the supply of pressurized air to the respective air cushioning bellows, or simply cushions, is controlled during driving automatically by a controller. Additionally, it is necessary to allow a manual activation and thus increase or decrease of the pressurized air in the air cushioning bellows, to adjust the vehicle level, e.g. during loading or unloading the truck. This is necessary, to e.g. adjust the level to a height of a loading ramp.

A valve device according to the aforementioned type, for example, is known from EP 2 516 187 A1. Therein, a valve device for an air suspension system in a vehicle is disclosed. The valve device comprises at least one cushion connection connectable to a pneumatic spring cushion of the air suspension system, a reserve connection connectable to a compressed air reserve, and a venting connection connectable to the atmosphere. The valve device moreover has an electrical actuation arrangement and a manual actuation element. A pneumatically actuable working valve arrangement is provided which, as a result of the actuation, can selectively connect the cushion connection with the reserve connection or the venting connection, or shutoff. The working valve arrangement can be actuated pneumatically both by the electrical actuation arrangement and by a pneumatic valve arrangement actuable via the manual actuation element. The working valve arrangement has at least one pneumatically actuable holding valve. According to the teaching of EP 2 516 187 A1, a pneumatic actuation connection of the at least one holding valve can, for the actuation thereof, be connected to the cushion connection.

Usually, such valve devices also comprise a return-to-ride valve (RTR) which on the one hand can block the position of the manual actuation element, and on the other hand is able to bring back the level of pressurized air in the cushions to the previous level, when the manual actuation element is switched to a driving position.

In one embodiment, EP 2 516 187 A1 uses a pressure sensor for determining the pressure supplied by the valve unit to the main valve unit as a pilot pressure. By measuring this pressure, it should be determined whether the manual actuation element is in the driving position or the lifting position.

A drawback associated therewith is that even though a pressure is measured, it is not known in which position the manual actuation element is, and it is also not known whether the return-to-ride valve is operating correctly.

DE 10 2011 051 504 A1 discloses an air suspension system for a commercial vehicle, especially a trailer. The air suspension system enables automatic levelling control and manual lifting and lowering by the driver using an actuation organ such as a lever. A lifting-lowering valve unit may comprise a selector shaft which has cams to actuate a 3/2-way valve, which can also be actuated via the actuation organ. An operating position of the actuation organ is detected by a sensor. Using an output signal of the sensor, a control unit can verify whether the actuation organ takes up a desired operating position. If this is not the case, an error message can be shown to a driver or operator, suitable control measures taken to induce the desired operating position of measures to ensure emergency operation can be taken.

A further valve device of the aforementioned type is known from EP 2 177 381 A1. The valve device for an air suspension in a vehicle disclosed therein comprises connectors for an air spring bellows of the air suspension system and for a compressed air supply, a ventilating connector which is connected to atmosphere, a manual operating element and a non-manual actuating element. It is possible that the valve device is adjusted both by means of the manual actuating element and by means of the non-manual actuating element in such a way that the connectors for an air spring bellows are connected to the connector for a compressed air supply or the ventilating connector. The valve device has a latching device by means of which the manual operating element can be latched in an at least one position. Moreover, the valve device has an unlocking device for unlocking the latching device which is configured in such a way that it is actuated upon actuation of the non-manual actuating element and unlocks the latching device as a result. A further similar device is disclosed in DE 103 54 056 B4.

It is an object of the invention to provide a valve device of the aforementioned type which makes it possible to determine whether the return-to-ride valve is operating correctly.

According to a first aspect of the invention, this problem is solved by a valve device with the features of claim 1. Such a valve device for controlling a pneumatic trailer air suspension system comprises at least one cushion connection connectable to a pneumatic spring cushion of the air suspension system, a supply connection connectable to a compressed air reservoir, and a venting connection connectable to the atmosphere. The valve device has a pneumatically actuable main valve unit, an electrical pilot control unit, and a manual pilot control unit. The electrical pilot control and the manual pilot control unit are adapted for providing at least one first pilot pressure to said main valve unit, wherein said main valve unit is adapted to provide at least a cushion pressure at said cushion connection dependent on the first pilot pressure. The manual pilot control unit comprises a manually operable camshaft for controlling at least a first valve body, wherein said camshaft at least is rotatable into a driving position, a lowering position and a lifting position. According to the invention, the valve device comprises a shaft sensor for directly determining the rotational position of said camshaft.

The invention is based on the idea that it is not enough to just measure the pilot control, a pilot pressure or the pressure supplied to the cushions. Rather, the invention proposes to directly determine the rotational position of the camshaft. The camshaft is operated manually and it may happen that a driver of the truck forgets to turn the camshaft to the driving position after unloading the truck e.g. in the lowering position. In this case, by detecting the rotational position of the camshaft, a signal can be provided to the driver, and/or a control unit for informing the driver that the camshaft is not in the correct rotational position, and/or by providing at least a control signal by the control unit for e.g. braking the vehicle.

The camshaft comprises a sensor portion, said sensor portion comprising a sensible structure. The sensible structure comprises at least a first, a second, and a third surface, which are formed at different minimum distances to the shaft sensor, and the shaft sensor is adapted to measure a distance to said first, second and third surfaces. Due to the sensor portion, having the sensible structure, a direct measurement of the rotational position of the camshaft is possible. It is not necessary to indirectly measure the camshaft position by detecting a pressure. Rather, the direct mechanical rotational position is measured.

Additional assigning first, second and third surfaces to each of the three positions of the camshaft (lifting, lowering and driving position), a clear determination of the rotational position of the camshaft and the responsive mode of operation is achieved. In contrast thereto, a pressure supplied by the valve unit does not necessarily identify an exact rotational position of the camshaft.

Preferably, the sensible structure is formed in an axial end face of the camshaft. This allows the sensible structure to be distant to any cams provided at the camshaft and particularly does not affect the function of the camshaft as it is common.

In a further preferred embodiment, the shaft sensor is an optical sensor. Alternatively, the shaft sensor is a capacitive sensor, or a kinetic sensor. All three options performing the shaft sensor are suitable to detect a distance to the first, second and third surfaces and in particular do not require movable mechanical elements, as a contact sensor would require. In particular, a non-contact measurement of the distance is contemplated.

According to the invention, the valve device further comprises an electronic control unit connected to the shaft sensor and the electrical pilot control unit, wherein the electronic control unit comprises means for receiving a sensor signal from said shaft sensor indicative for one of the positions. The electronic control unit comprises means for providing at least a first corresponding switching signal to the electrical pilot control unit. In this instance, it is possible to e.g. cut off pressurized air supply to the manual pilot control unit and ultimately to the main valve unit, when the camshaft is in the lowering position or in the driving position. Thus, the actual control of the pressurized air supplied by the valve device is not only dependent on the mechanical position of the camshaft and the mechanical actuation of the valves actuable by means of a camshaft, but rather also on electrically controllable valves of the electrical pilot control unit which are switched dependent on the rotational position of the camshaft measured by the shaft sensor. Thus, in this instance, safety of the truck can be increased.

According to a further preferred embodiment, the main valve unit comprises a working valve and at least a first pneumatically actuable holding valve. The working valve is adapted to receive the first pilot pressure and dependent on the first pilot pressure provide a working pressure to the respective cushions. The holding valve preferably is adapted to cut off a pressure line for the working pressure, thus preventing pressurized air flowing out of the cushions. Thus, the holding valve actually locks the pressure within the cushions when desired.

Preferably, the main valve unit comprises at least a second pneumatically actuable holding valve. Thus, according to this embodiment, a second suspension pressure can be locked in the cushions, allowing that at least two sets of cushions can be controlled independently. One set of cushion may be assigned to a first axis and a second of cushions to a second axis, or to first and second sides of the vehicle.

Preferably, the working valve is formed as a 3/2-way valve comprising a first working valve port, connected to the supply connection, a second working valve port connected to the at least first pneumatically actuable holding valve, a third working valve port connected to the venting connection and a working control port for receiving the first pilot pressure from the electrical pilot control unit and/or said manual pilot control unit.

The electrical pilot control unit preferably comprises a first pilot valve for providing a second pilot pressure to the manual pilot control unit. The first pilot valve thus may be used to cut off or supply the manual pilot control unit with the second pilot pressure which may then be further processed by the manual pilot control unit.

Moreover, it is preferred that the electrical pilot control unit comprises a second pilot valve for receiving a third pilot pressure from said manual pilot control unit and providing said first pilot pressure to said main valve unit. The first pilot pressure thus can be locked or delivered using the second pilot valve which can be controlled by the control unit. It shall be understood that the first and second pilot valves can be controlled by the control unit in particular dependent on the sensor signal from said shaft sensor.

In a further preferred embodiment, the manual pilot control unit comprises a valve housing in which said first valve body, a second valve body and said camshaft are provided. Preferably, the first and second valve bodies are individually movable in a first and second valve chamber, respectively. The first valve chamber preferably comprises a first chamber port, a second chamber port, and a third chamber port, wherein the first valve body in an idle position sets the first and second chamber port into connection, and in a lifted position sets the second and third chamber ports into connection. The second valve chamber furthermore preferably comprises a fourth chamber port, a fifth chamber port, and a sixth chamber port, wherein the second valve body in an idle position sets the fourth and fifth chamber ports into connection, and in a lifted position sets the fifth and sixth chamber ports into connection. The first and second valve bodies are pushed from the idle to the lifted position preferably by respective cams on the camshaft. Thus, by manually rotating the camshaft, the first and second valve bodies may individually be positioned in desired positions to provide the desired flow of pressurized air.

Preferably, said first chamber port is connected to the first pilot valve and receives said second pilot pressure; said second chamber port is connected to said working control port; and said third chamber port is connected to said supply connection. Moreover, it is preferred that said fourth chamber port is connected to said second pilot valve for providing the third pilot pressure to the second pilot valve, said fifth chamber port is connected to said at least first pneumatically actuable holding valve for providing a holding pressure thereat; and said sixth chamber port is connected to the or a venting connection. By this arrangement, it is possible that by rotating the camshaft, a lowering, a lifting and a driving position can be achieved and the cushions of the air suspension system can be vented or de-vented accordingly.

In a further preferred embodiment, the valve device comprises an un-lockable latching device which can be unlocked by the electrical pilot control unit. The latching device preferably is used to latch a rotational position of the camshaft for prohibiting manual rotation of the camshaft out of the latched position in one of the other positions.

Preferably, said un-lockable latching device comprises an unlocking valve connected to said first pilot valve for receiving the second pilot pressure. Thus, as long as the second pilot pressure is received, the latching device is unlocked and the camshaft can be rotated manually.

In a further preferred embodiment, the valve device comprises an electronic control device with a microprocessor and with a program memory in which a control program is stored, the electronic control device being setup for controlling an air suspension system suitable for a vehicle by means of the valve device.

The above-mentioned problem is solved in a second aspect by a method for controlling an air suspension system in a vehicle by means of a valve device according to at least one of the previously described preferred embodiments of the valve device according to the first aspect of the invention, wherein the method comprises at least the steps: receiving a sensor signal at a control device, said sensor signal being indicative for one of the positions, and providing a corresponding signal to a driver. The positions in particular comprise a lifting, a lowering and a driving position and in particular are the positions of a rotatable camshaft of the manual actuable pilot control unit.

For a more complete understanding of the invention, the invention will now be described in detail with reference to the accompanying drawings. The detailed description will illustrate and describe what is considered as a preferred embodiment of the invention. It should of course be understood that various modifications and changes in form or detail could readily be made. It is therefore intended that the invention may not be limited to the exact form and detail shown and described herein, nor to anything less than the whole of the invention as claimed herein after. Further, the features described in the description, the drawings and the claims disclosing the invention may be essential for the invention considered alone or in combination. In particular, any reference signs in the claims shall not be construed as limiting the scope of the invention. The wording "comprising" does not exclude other elements or steps. The word "a" or "an" does not exclude the plurality. The wording "a number of" items comprising also the number 1, i.e. a single item, and further numbers like 2, 3, 4 and so forth. In the accompanying drawings:
- Fig. 1: a schematic overview in a simplified version of the valve device;
- Fig. 2: a layout of the valve device in more detailed version;
- Fig. 3: a further layout of the valve device according to Fig. 2 comprising a return-to-ride valve;
- Fig. 4: a portion of a camshaft with a sensing surface; and
- Figs. 5a, 5b: two different perspective views of the camshaft.

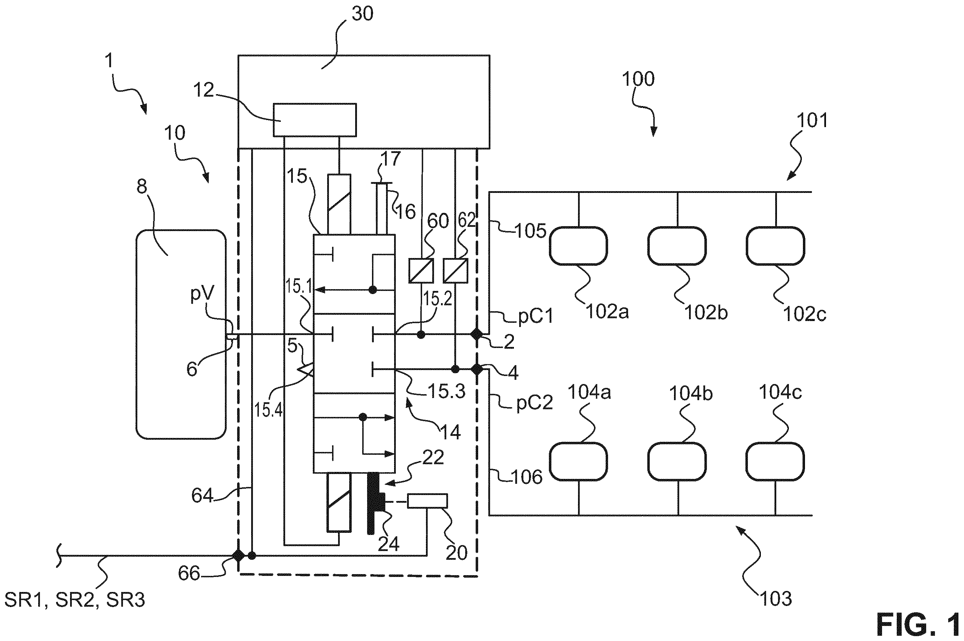

Fig. 1 shows a simplified version of the valve device 1 for controlling a pneumatic trailer air suspension system 100. The trailer air suspension system 100 according to this embodiment comprises a first side 101 comprising three cushions 102a, 102b, 102c for e.g. the driver's side of the trailer, and a second side 103 with cushions 104a, 104b, 104c for e.g. a co-driver's side of the trailer.

The first side 101 comprises a first pressure distribution line 105 connectable to a first cushion connection 2 of the valve device 1 and the second side 103 comprises a second pressure distribution line 106 connectable to a second cushion connection of the valve device 1.

The valve device 1 moreover comprises a supply connection 6 connectable to a compressed air reservoir 8 which usually is dedicated for the trailer air supply system 100 of the trailer.

The reservoir 8 provides a reservoir pressure pV at the supply connection. At the first and the second cushion connections 2, 4 respective first and second cushions pC1, pC2 are provided.

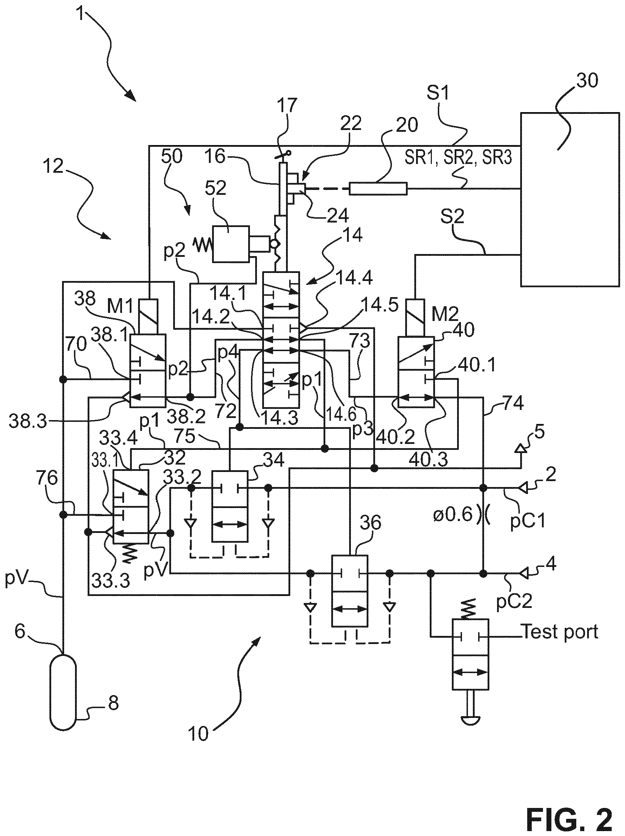

For processing the reservoir pressure pV from the reservoir 8 to the first and second cushion pressures pC1, pC2, the valve device 1 comprises a main valve unit 10, an electrical pilot control unit 12 and a manual pilot control unit 14 (see also Fig. 2). In Fig. 1, mainly the manual pilot control unit 14 is shown and will be described in detail.

The manual pilot control unit is switchable into three positions and comprises four connections. Thus, the manual pilot control unit can be seen as a 4/3-way valve in this embodiment. It comprises a first 4/3-way valve port 15.1, a second 4/3-way valve port 15.2, a third 4/3-way valve port 15.3 and a fourth 4/3-way valve port 15.4. The first 4/3-way valve port 15.1 is connected to the supply connection 6, the second 4/3-way valve port 15.2 is connected to the first cushion connection 2, the third 4/3-way valve port 15.3 is connected to the second cushion connection 4, and the fourth 4/3-way valve port 15.4 is connected to an exhaust 5.

When the manual pilot control unit 14 is in the idle position, as shown in Fig. 1, all ports 15.1 to 15.4 are blocked and neither reservoir pressure pV from the first 4/3-way valve port 15.1 is delivered, nor first or second cushion pressures pC1, pC2 may flow from the first and second cushion connections 2, 4 in the direction of the manual pilot control unit 14.

A camshaft 16 is provided with a handle 17 for rotating the camshaft 16. When the camshaft 16 is rotated, the 4/3-way valve can be brought in one of the second or third positions, which are not shown in Fig. 1. In the second position, which is the lowering position, the second and third 4/3-way valve ports are connected with the exhaust 5 via the fourth 4/3-way valve port. In turn, in the third position, which is the lifting position, the second and third 4/3-way valve ports 15.2, 15.3 are connected with the first 4/3-way valve port 15.1, so that supply pressure pV is supplied to the first and second cushion connections 2, 4 for filling the cushions 102a - 102c, 104a - 104c.

For determining in which position the camshaft 16 is, on the one hand two pressure sensors 60, 62 may be used provided. A first pressure sensor 60 measures the pressure at the first cushion port 2, and a second pressure sensor 62 measures the pressure at the second cushion port 4. Both sensors 60, 62 are connected to an electrical control unit 30 which can control the electrical pilot control unit 12 and which vice versa may control the manual pilot control unit 14 or otherwise to adjust the first and second cushion pressures pC1, pC2. When both pressure sensors 60, 62 determine that ambient pressure is present at the first and second cushion ports 2, 4, this is an indicator for the 4/3-way valve 15 being in the second position, i.e. the lowering position. However, this might not be sufficient for any pressure measured by the sensors 60, 62.

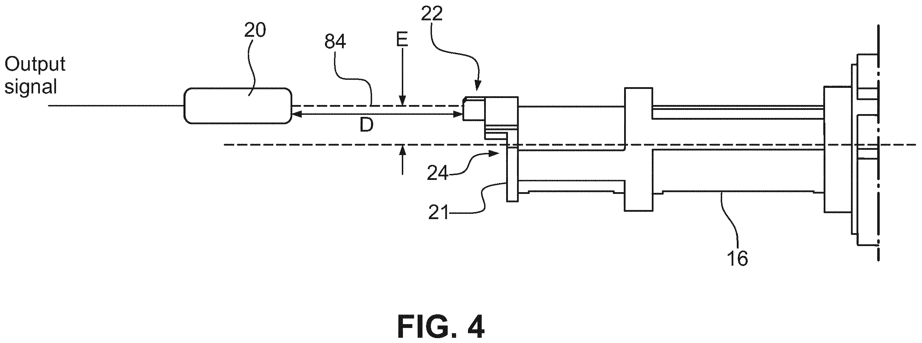

Therefore, according to the present disclosure, a shaft sensor 20 is provided for directly determining the rotational position of the camshaft 16. The camshaft 16 comprises a sensor portion 22 with a sensible structure 24. This will be described in more detail below with respect to Figs. 4 to 5b in detail.

The shaft sensor 20 uses a contactless sensing principle for sensing the sensible structure 24 for determining the rotational position of the camshaft 16. The shaft sensor 20 provides respective first, second and third sensor signals SR1, SR2, SR3 via a first signal line 64 to the electrical control unit 30. Moreover, via an electrical interface 66, the first, second and third sensor signals SR1, SR2, SR3 can be provided for e.g. providing the driver of the respective vehicle with signals representing the rotational position of the camshaft 16.

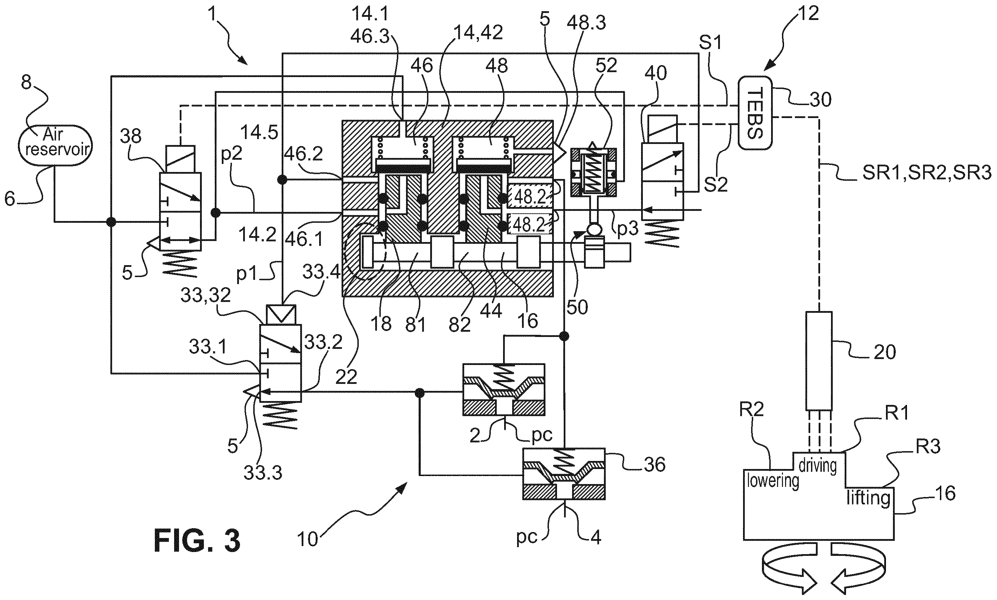

Fig. 2 shows a more detailed version of the layout of the valve device 1. In particular, the manual pilot control unit is formed as a 6/3-way valve with a first 6/3-way valve port 14.1, a second 6/3-way valve port 14.2, a third 6/3-way valve port 14.3, a fourth 6/3-way valve port 14.4, a fifth 6/3-way valve port 14.5 and a sixth 6/3-way valve port 14.6. All these ports lead to respective chamber ports of valve chambers which will be described in more detail with regard to Fig. 3 below.

In contrast to the first embodiment of Fig. 1, the embodiment shown in Fig. 2 also comprises a main valve unit 10 which will be described in detail below. In addition, also the electrical pilot control unit 12 is shown in greater detail than in Fig. 1. In particular, the electrical pilot control unit 12 comprises a first pilot valve 38 and a second pilot valve 40. Both, the first and the second pilot valves 38, 40 are formed as 3/2-way valves which are electrically controllable and receive respective first and second switching signals S1, S2 from the electrical control unit 30. The first pilot valve comprises a first pilot valve port 38.1, a second pilot valve port 38.2, and a third pilot valve port 38.3. In the idle, not energized state, which is shown in Fig. 2, the second pilot valve port 38.2 is connected with the third pilot valve port 38.3. When the first switching signal S1 is provided, the first pilot valve 38 is switched into the second state, which is not shown in Fig. 2, and in which the first pilot valve port 38.1 is connected to the second pilot valve port 38.2.

In a similar manner, the second pilot valve 40 comprises a fourth pilot valve port 40.1, a fifth pilot valve port 40.2, and a sixth pilot valve port 40.3. Again, in the idle state, which is shown in Fig. 2, the fifth pilot valve port 40.2 is connected with the sixth pilot valve port 40.3. When the second switching signal S2 is provided, the second pilot valve 40 switches into the second position, which is not shown in Fig. 2, and in which the fourth pilot valve port 40.1 is connected to the fifth pilot valve port 40.2.

The first pilot valve port 38.1 is connected via a first pressure line 70 with the supply connection 6 and receives the supply pressure pV. The second pilot valve port 38.2 is connected via a second pressure line 72 to the second 6/3-way valve port 14.2. The third pilot valve port 38.3 is connected to an exhaust 5, in this embodiment (Fig. 2) a common exhaust 5 of the valve device 1. Thus, when the first pilot valve 38 is in the idle position, the second 6/3-way valve port 14.2 is connected to the exhaust.

In turn, the fifth pilot valve port 14.2 is connected via a third pressure line 73 to the sixth 6/3-way valve port 14.6. The sixth pilot valve port 40.3 is connected via a branching off line 74 to both, the first and second cushion connections 2, 4 for receiving the supplied first and second cushion pressures pC1, pC2. The fourth pilot valve port 40.1 is connected via a fifth pressure line 75 with a working control port 33.4 of a working valve 32. Thus, the working valve 32 in turn is again formed as a 3/2-way valve. It comprises in addition to the working control port 33.4 a first working valve port 33.1, a second working valve port 33.2 and a third working valve port 33.3. The first working valve port 33.1 is connected via a sixth pressure line 76 with the supply connection 6 and receives the supply pressure pV. The second working valve port 33.2 is connected to the main valve unit 10, and the third working valve port 33.3 is connected to an exhaust 5. Thus, the working valve 32 in general is used to control the pressure supplied to the main valve unit 10.

The main valve unit 10 is used to receive the supply pressure pV from the working valve 32 and supply the first and second cushion pressures pC1, pC2 dependent on a fourth pilot pressure p4. The fourth pilot pressure p4 is received at the main valve unit 10 from the third 6/3-way valve port 14.3.

In particular, the main valve unit 10 comprises a first pneumatically actuable holding valve 34, and a second pneumatically actuable holding valve 36. Both receive the fourth pilot pressure p4 and are used to regulate the first and second cushion pressures pC1, pC2, respectively, dependent on the fourth pilot pressure p4 and the pressure supplied by the working valve 32.

In the idle position of the manual pilot control unit 14, which is shown in Fig. 2, the first and fourth 6/3-way valve ports are blocked. The second 6/3-way valve port is connected to the fifth 6/3-way valve port, such that the second pilot pressure p2 is supplied to the fifth pressure line 75 and is identical to the first pilot pressure p1. Moreover, the third 6/3-way valve port 14.3 is connected to the sixth 6/3-way valve port 14.6, such that the third and fourth pilot pressures p3, p4 are identical, too. This position of the manual pilot control unit 14 is the driving position, and the first and second cushion pressures pC1, pC2 may be controlled using the electrical pilot control unit 12 and the main valve 32 only.

The driver may also actuate the handle 17 for e.g. pushing the camshaft 16 into the lifting position which is the upper position of the manual pilot control unit 14 with respect to Fig. 2. In this position, the first 6/3-way valve port 14.1 is connected to the fifth 6/3-way valve port 14.5, so that the first pilot pressure p1 equals the supply pressure pV which is the maximum pressure. While the first pilot pressure p1 has the maximum value, also the first and second cushion pressures pC1, pC2 will become the maximum value, and in result lifting the trailer.

In turn, when the user pulls the handle 17 and moves the camshaft 16 to the lowering position, which is the lower position of the manual pilot control unit 14 with respect to Fig. 2, the third 6/3-way valve port 14.3 is set into connection with the fourth 6/3-way valve port 14.4 and therefore the third 6/3-way valve port 14.3 is connected to the exhaust 5 and the fourth pilot pressure p4 becomes the atmospheric pressure. At the same time, the second 6/3-way valve port 14.2 is connected to the fifth 6/3-way valve port 14.5 so that the first pilot pressure p1 equals the second pilot pressure p2. When the first pilot control valve 38 is in the idle state, the first pilot pressure p1 will also become the atmospheric value. Thus, in turn, the first and second pneumatically actuable holding valves 34, 36 are opened and the working valve 32 is switched to the position shown in Fig. 2, so that the second working valve port 33.2 is connected to atmosphere. The first and the second cushion pressures pC1, pC2 will become the atmospheric value and the trailer will lower to the maximum value.

Fig. 3 now shows the embodiment of Fig. 2, wherein the manual pilot control unit 14 is shown in more detail, in particular to show how the camshaft 16 may operate. Identical and similar elements are shown with reference signs used in Fig. 2. In so far, reference is made to the above description. In the following, in particular the differences and details of Fig. 3 are explained.

The manual pilot control unit 14 comprises a valve housing 42 in which the camshaft 16 is rotatably seated. The manual pilot control unit 14 moreover comprises a first valve body 18 and a second valve body 44 which are movable within respective first and second valve chambers 46, 48. The camshaft 16 comprises a first cam 81 and a second cam 82, wherein the first cam 81 may push the first valve body 18 with respect to Fig. 3 upwards, and the second cam 82 may push the second valve body 44 upwards with respect to Fig. 3. The first and second cams 81, 82 are displaced with regard to their rotational position, such that it is possible to selectively push the first and the second valve bodies 18, 44 upwards.

The first valve chamber 46 comprises a first chamber port 46.1, a second chamber port 46.2, and a third chamber port 46.3. The second valve chamber 48 comprises a fourth chamber port 48.1, a fifth chamber port 48.2, and a sixth chamber port 48.3. When the first valve body 18 is in the idle position, which is shown in Fig. 3, the first valve body 18 sets the first and second chamber ports 46.1, 46.2 into connection. In the lifted position, the first valve body 18 sets the second and third chamber ports 46.2, 46.3 into connection. Thus, the first chamber port 46.1 equals the third 6/3-way valve port 14.3, the second chamber port 46.2 equals the fifth 6/3-way valve port 14.5, and the third chamber port 46.3 equals the first 6/3-way valve port 14.1.

In the same manner, the second valve body 44 in an idle position sets the fourth and fifth chamber ports 48.1, 48.2 into connection, and in the lifted position sets the fifth and sixth chamber ports 48.2, 48.3 into connection. Thus, the fourth chamber port 48.1 equals the sixth 6/3-way valve port 14.6, the fifth chamber port 48.2 equals the fifth 6/3-way valve port 14.5, and the sixth chamber port 48.3 equals the fourth 6/3-way valve port 14.4.

One further aspect, which can be seen in Figs. 2 and 3, is a latching device 50, comprising an unlocking valve 52 connected to the first pilot valve 38 for receiving the second pilot pressure p2. When the unlocking valve 52 receives the second pilot pressure p2, the latching device 50 unlocks the camshaft 16 and allows the camshaft 16 to be manually rotated. Thus, as long as the second pilot pressure p2 is supplied by the first pilot valve 38, manually rotating the camshaft 16 is prohibited.

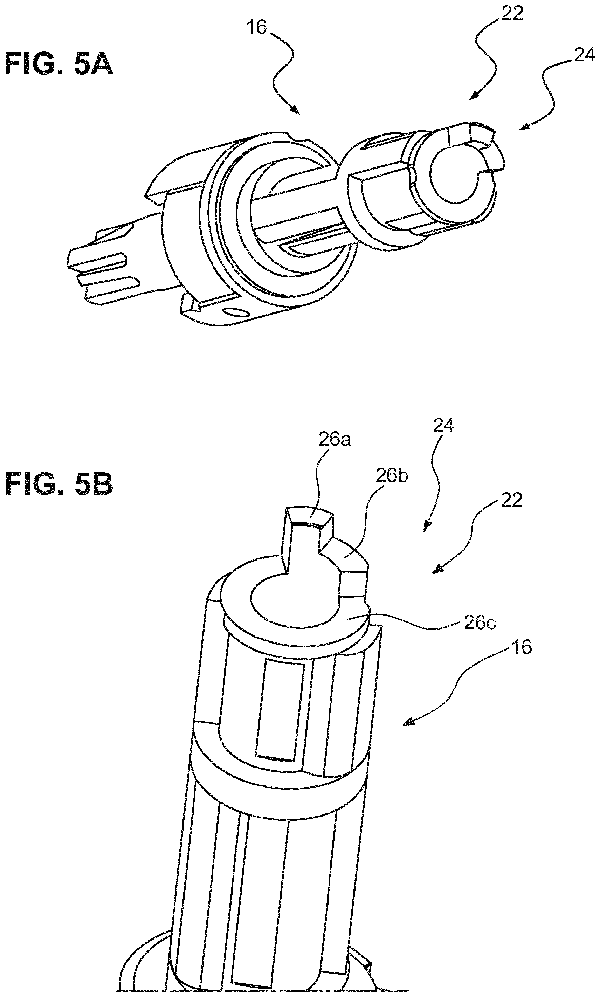

Figs. 4 to 5b now show different views of the camshaft 16, in particular for viewing the shaft sensor 20 and the sensor portion 22. The camshaft 16 comprises a rotational axis A (see Fig. 4). The shaft sensor 20 in this embodiment is formed as an optical sensor and emits a sensor beam 84. The sensor beam 84 is emitted substantially parallel to the rotational axis A, but with a distance E to the rotational axis A. The distance E could also be seen as an eccentric E. The eccentric E should have a value, which is high enough so that the sensor beam 84 may be emitted onto different surfaces 26a, 26b, 26c, as will be described with reference to Figs. 5a and 5b, respectively. The shaft sensor 20 is used to measure the distance between the shaft sensor 20 and the respective surface 26a, 26b, 26c of the sensible structure 24.

The sensible structure 24 (see Figs. 5a and 5b) comprises a stepped surface having first, second and third surfaces 26a, 26b, 26c, which each have a different distance from the shaft sensor 20, so that the distance D is different for each of the three surfaces 26a, 26b, 26c. The first surface 26a is associated with the driving position R1 (see also Fig. 3), the second surface 26b is associated with the lowering position R2, and the third surface 26c is associated with the lifting position R3. It should however be understood that also a different association of the three surfaces 26a, 26b, 26c to the different positions R1, R2, R3 could be contemplated.

The shaft sensor 20 thus measures the distance D between the shaft sensor 20 and the respective first, second or third surfaces 26a, 26b, 26c and issues a respective sensing signal SR1, SR2, SR3, indicating the respective distance, and/or the rotational position R1, R2, R3 of the camshaft 16. These sensor signals SR1, SR2, SR3 are then supplied to the electrical control unit 30 as described above, and/or issued to the driver, as has been described with respect to Fig. 1 above.

### List of reference signs (part of description)

- 1: Valve device
- 2: First cushion connection
- 4: Second cushion connection
- 6: Supply connection
- 5: exhaust
- 8: Reservoir
- 10: Main valve unit
- 12: electrical pilot control unit
- 14: manual pilot control unit
- 14.1: First 6/3 way valve port
- 14.2: second 6/3 way valve port
- 14.3: third 6/3 way valve port
- 14.4: fourth 6/3 way valve port
- 14.5: fifth 6/3 way valve port
- 14.6: sixth 6/3 way valve port
- 15: 4/3 way valve
- 15.1: First 4/3 way valve port
- 15.2: second 4/3 way valve port
- 15.3: third 4/3 way valve port
- 15.4: fourth 4/3 way valve port
- 16: Cam shaft
- 17: Handle
- 18: First valve body
- 20: Shaft sensor
- 22: Sensor portion
- 24: Sensible structure
- 26a: First surface
- 26b: Second surface
- 26c: Third surface
- 30: Electrical control unit
- 32: Working valve
- 33: 3/2 way valve
- 33.1: First working valve port
- 33.2: second working valve port
- 33.3: third working valve port
- 33.4: Working control port
- 34: First pneumatically actuable holding valve
- 36: Second pneumatically actuable holding valve
- 38: First pilot valve
- 38.1: First pilot valve port
- 38.2: second pilot valve port
- 38.3: third pilot valve port
- 40: Second pilot valve
- 40.1: fourth pilot valve port
- 40.2: fifth pilot valve port
- 40.3: sixth pilot valve port
- 42: Valve housing
- 44: Second valve body
- 46: First valve chamber
- 46.1: First chamber port
- 46.2: Second chamber port
- 46.3: Third chamber port
- 48: Second valve chamber
- 48.1: fourth chamber port
- 48.2: fifth chamber port
- 48.3: sixth chamber port
- 50: Latching device
- 52: Unlocking valve
- 60: First pressure sensor
- 62: Second pressure sensor
- 64: First electrical signal line
- 66: Electrical interface
- 70: First pressure line
- 72: Second pressure line
- 73: Third pressure line
- 74: Branching off control line
- 75: Fifth pressure line
- 81: First cam
- 82: Second cam
- 84: Sensor beam
- 100: Trailer air suspension system
- 101: First side
- 102a, 102b, 102c: Cushions of first side
- 103: Second side
- 104a, 104b, 104c: Cushions of second side
- 105: First pressure distribution line
- 106: Second pressure distribution line
- A: Rotational axis of cam shaft
- E: eccentric
- D: Distance to sensor
- p1: First pilot pressure
- p2: second pilot pressure
- p3: third pilot pressure
- p4: fourth pilot pressure
- pV: Reservoir pressure
- pC1: First cushion pressure
- pC2: Second cushion pressure
- R1: Driving position
- R2: Lowering position
- R3: Lifting position
- SR1: First sensor signal
- SR2: Second sensor signal
- SR3: Third sensor signal

## Claims

1. A valve device (1) for controlling a pneumatic trailer air suspension system (100), the valve device (1) comprising:
at least one cushion connection (2, 4) connectable to a pneumatic spring cushion (102a, 102b, 102c, 104a, 104b, 104c) of the air suspension system (100),
a supply connection (6) connectable to a compressed air reservoir (8), and
a venting connection (5) connectable to the atmosphere,
wherein the valve device (1) has a pneumatically actuable main valve unit (10), an electrical pilot control unit (12), and a manual pilot control unit (14), the electrical pilot control unit (12) and manual pilot control unit (14) are adapted for providing at least one first pilot pressure (p1) to said main valve unit (10), wherein said main valve unit (10) is adapted to provide at least a cushion pressure (pC) at said cushion connection (2, 4) dependent on the first pilot pressure (P1),
wherein the manual pilot control unit (14) comprises a manually operatable camshaft (16) for controlling at least a first valve body (18), wherein said camshaft (16) at least is rotatable into a driving position (R1), a lowering position (R2) and a lifting position (R3),
wherein the valve device (1) has a shaft sensor (20) for directly determining the rotational position of said camshaft (16),
wherein the valve device (1) comprises an electronic control unit (30) connected to said shaft sensor (20) and said electrical pilot control unit (12), wherein the electronic control unit (30) comprises means for receiving a sensor signal (SR1, SR2, SR3) from said shaft sensor (20) indicative for one of the positions (R1, R2, R3),
wherein the electronic control unit (30) comprises means for providing at least a first switching signal (S1) corresponding to the sensor signal (SR1, SR2, SR3) to said electrical pilot control unit (12),
**characterized in that** said camshaft (16) comprises a sensor portion (22), said sensor portion (22) comprising a sensible structure (24), and
wherein said sensible structure (24) comprises at least a first, a second, and a third surface (26a, 26b, 26c), which are formed at different minimum distances to the shaft sensor (20) and the shaft sensor (20) is adapted to measure a distance to said first, second, and third surfaces (26a, 26b, 26c).

2. The valve device (1) according to claim 1, wherein said sensible structure (24) is formed at an axial end face (21).

3. The valve device (1) according to any of the above claims, wherein said shaft sensor (20) is an optical sensor.

4. The valve device (1) according to claim 1 or 2, wherein said shaft sensor (20) is a capacitive sensor.

5. The valve device (1) according to claim 1 or 2, wherein said shaft sensor (20) is a magnetic sensor.

6. The valve device (1) according to any of the above claims, wherein said main valve unit (10) comprises a working valve (32) and at least a first pneumatically actuable holding valve (34).

7. The valve device (1) according to claim 6, wherein said main valve unit (10) comprises a second pneumatically actuable holding valve (36).

8. The valve device (1) according to claim 6 or 7, wherein said working valve (32) is formed as a 3/2-way valve (33) comprising a first working valve port (33.1) connected to the supply connection (6), a second working valve port (33.2), connected to the at least first pneumatically actuable holding valve (34), a third working valve port (33.4) connected to the venting connection (5), and a working control port (33.4) for receiving the first pilot pressure (p1) from the pilot control unit (12) and/or said manual pilot control unit (14).

9. The valve device (1) according to any of the above claims, wherein said electrical pilot control unit (12) comprises a first pilot valve (38) for providing a second pilot pressure (p2) to said manual pilot control unit (14).

10. The valve device (1) according to any of the above claims, wherein said electrical pilot control unit (12) comprises a second pilot valve (40) for receiving a third pilot pressure (p3) from said manual pilot control unit (14) and providing said first pilot pressure (p1) to said main valve unit (10).

11. The valve device (1) according to any of the above claims, wherein said manual pilot control unit (14) comprises a valve housing (42), in which said first valve body (18), a second valve body (44) and said camshaft (16) are provided.

12. The valve device (1) according to claim 11, wherein said first and second valve bodies (18, 44) are individually moveable in a first and second valve chamber (46, 48) respectively;
wherein said first valve chamber (46) comprises a first chamber port (46.1), a second chamber port (46.2), and a third chamber port (46.3), wherein the first valve body (18) in an idle position sets the first and second chamber ports (46.1, 46.2) into connection, and in a lifted position sets the second and third chamber ports (46.2, 46.3) into connection; and
wherein said second valve chamber (48) comprises a fourth chamber port (48.1), a fifth chamber port (48.2), and a sixth chamber port (48.3), wherein the second valve body (44) in an idle position sets the fourth and fifth chamber ports (48.1, 48.2) into connection, and in a lifted position sets the fifth and sixth chamber ports (48.2, 48.3) into connection.

13. The valve device (1) according to claim 8, 9, and 12, wherein:
said first chamber port (46.1) is connected to first pilot valve (38) and receives said second pilot pressure (p2);
said second chamber port (46.2) is connected to said working control port (33.4); and
said third chamber port (46.3) is connected to said supply connection (6).

14. The valve device (1) according to claim 8, 10, 12, wherein:
said fourth chamber port (48.1) is connected to said second pilot valve (40) for providing the third pilot pressure (p3) to the second pilot valve (40);
said fifth chamber port (48.2) is connected to said at least first pneumatically actuable holding valve (34) for providing a holding pressure (pH) thereat; and
said sixth chamber port (48.3) is connected to the or a venting connection (5).

15. The valve device (1) according to any of the above claims, comprising an unlockable latching device (50) which can be unlocked by the electrical pilot control unit (12).

16. The valve device (1) according to claim 9 and 15, wherein said unlockable latching device (50) comprises an unlocking valve (52) connected to said first pilot valve (38) for receiving the second pilot pressure (p2).

17. The valve device (1) according to at least one of the preceding claims, comprising an electronic control device with a microprocessor and with a program memory in which a control program is stored, the electronic control device being set up for controlling an air suspension system suitable for a vehicle by means of the valve device (1).

18. Method for controlling an air suspension system suitable for a vehicle by means of a valve device (1) according to at least one of claims 1 to 16, comprising the following steps:
(a) receiving a sensor signal (SR1, SR2, SR3) at a control device (30), said sensor signal indicative for one of the positions (R1, R2, R3), and
(b) providing a corresponding signal to a driver.

## Patentansprüche

1. Ventilvorrichtung (1) zum Steuern eines pneumatischen Anhänger-Luftfederungssystems (100), die Ventilvorrichtung (1) umfassend:
mindestens eine Dämpfungsverbindung (2, 4), die mit einer Luftfederdämpfung (102a, 102b, 102c, 104a, 104b, 104c) des Luftfederungssystems (100) verbindbar ist,
eine Versorgungsverbindung (6), die mit einem Druckluftspeicher (8) verbindbar ist und
eine Entlüftungsverbindung (5), die mit der Atmosphäre verbindbar ist,
wobei die Ventilvorrichtung (1) eine pneumatisch betätigbare Hauptventileinheit (10), eine elektrische Vorsteuereinheit (12) und eine manuelle Vorsteuereinheit (14) aufweist, die elektrische Vorsteuereinheit (12) und die manuelle Vorsteuereinheit (14) zum Bereitstellen von mindestens einem ersten Steuerdruck (p1) an die Hauptventileinheit (10) angepasst sind, wobei die Hauptventileinheit (10) angepasst ist, um mindestens einen Dämpfungsdruck (pC) an der Dämpfungsverbindung (2, 4) abhängig von dem ersten Steuerdruck (p1) bereitzustellen,
wobei die manuelle Vorsteuereinheit (14) eine manuell betätigbare Nockenwelle (16) zum Steuern mindestens eines ersten Ventilkörpers (18) umfasst, wobei die Nockenwelle (16) mindestens in eine Fahrposition (R1), eine Senkposition (R2) und eine Hebeposition (R3) drehbar ist,
wobei die Ventilvorrichtung (1) einen Wellensensor (20) zum direkten Bestimmen der Drehposition der Nockenwelle (16) aufweist,
wobei die Ventilvorrichtung (1) eine elektronische Steuereinheit (30) umfasst, die mit dem Wellensensor (20) und der elektrischen Vorsteuereinheit (12) verbunden ist, wobei die elektronische Steuereinheit (30) Mittel zum Empfangen eines Sensorsignals (SR1, SR2, SR3) von dem Wellensensor (20) umfasst, das eine der Positionen (R1, R2, R3) anzeigt,
wobei die elektronische Steuereinheit (30) Mittel zum Bereitstellen von mindestens einem ersten Schaltsignal (S1), das dem Sensorsignal (SR1, SR2, SR3) entspricht, an die elektrische Vorsteuereinheit (12) umfasst,
**dadurch gekennzeichnet, dass** die Nockenwelle (16) einen Sensorabschnitt (22) umfasst, der Sensorabschnitt (22) umfassend eine empfindliche Struktur (24), und
wobei die empfindliche Struktur (24) mindestens eine erste, eine zweite und eine dritte Oberfläche (26a, 26b, 26c) umfasst, die in unterschiedlichen Mindestabständen zu dem Wellensensor (20) ausgebildet sind, und der Wellensensor (20) angepasst ist, um einen Abstand zu der ersten, zweiten und dritten Oberfläche (26a, 26b, 26c) zu messen.

2. Ventilvorrichtung (1) nach Anspruch 1, wobei die empfindliche Struktur (24) an einer axialen Endfläche (21) ausgebildet ist.

3. Ventilvorrichtung (1) nach einem der vorstehenden Ansprüche, wobei der Wellensensor (20) ein optischer Sensor ist.

4. Ventilvorrichtung (1) nach Anspruch 1 oder 2, wobei der Wellensensor (20) ein kapazitiver Sensor ist.

5. Ventilvorrichtung (1) nach Anspruch 1 oder 2, wobei der Wellensensor (20) ein Magnetsensor ist.

6. Ventilvorrichtung (1) nach einem der vorstehenden Ansprüche, wobei die Hauptventileinheit (10) ein Arbeitsventil (32) und mindestens ein erstes pneumatisch betätigbares Halteventil (34) umfasst.

7. Ventilvorrichtung (1) nach Anspruch 6, wobei die Hauptventileinheit (10) ein zweites pneumatisch betätigbares Halteventil (36) umfasst.

8. Ventilvorrichtung (1) nach Anspruch 6 oder 7, wobei das Arbeitsventil (32) als ein 3/2-Wegeventil (33) ausgebildet ist, umfassend einen ersten Arbeitsventilanschluss (33.1), der mit der Versorgungsverbindung (6) verbunden ist, einen zweiten Arbeitsventilanschluss (33.2), der mit dem mindestens ersten pneumatisch betätigbaren Halteventil (34) verbunden ist, einen dritten Arbeitsventilanschluss (33.4), der mit der Entlüftungsverbindung (5) verbunden ist, und einen Arbeitssteueranschluss (33.4) zum Empfangen des ersten Steuerdrucks (p1) von der Vorsteuereinheit (12) und/oder der manuellen Vorsteuereinheit (14).

9. Ventilvorrichtung (1) nach einem der vorstehenden Ansprüche, wobei die elektrische Vorsteuereinheit (12) ein erstes Vorsteuerventil (38) zum Bereitstellen eines zweiten Steuerdrucks (p2) an die manuelle Vorsteuereinheit (14) umfasst.

10. Ventilvorrichtung (1) nach einem der vorstehenden Ansprüche, wobei die elektrische Vorsteuereinheit (12) ein zweites Vorsteuerventil (40) zum Empfangen eines dritten Steuerdrucks (p3) von der manuellen Vorsteuereinheit (14) und zum Bereitstellen des ersten Steuerdrucks (p1) an die Hauptventileinheit (10) umfasst.

11. Ventilvorrichtung (1) nach einem der vorstehenden Ansprüche, wobei die manuelle Vorsteuereinheit (14) ein Ventilgehäuse (42) umfasst, in dem der erste Ventilkörper (18), ein zweiter Ventilkörper (44) und die Nockenwelle (16) bereitgestellt sind.

12. Ventilvorrichtung (1) nach Anspruch 11, wobei der erste und der zweite Ventilkörper (18, 44) einzeln in einer ersten bzw. zweiten Ventilkammer (46, 48) bewegbar sind;
wobei die erste Ventilkammer (46) einen ersten Kammeranschluss (46.1), einen zweiten Kammeranschluss (46.2) und einen dritten Kammeranschluss (46.3) umfasst, wobei der erste Ventilkörper (18) in einer Leerlaufposition den ersten und den zweiten Kammeranschluss (46.1, 46.2) in Verbindung setzt und in einer angehobenen Position den zweiten und den dritten Kammeranschluss (46.2, 46.3) in Verbindung setzt; und
wobei die zweite Ventilkammer (48) einen vierten Kammeranschluss (48.1), einen fünften Kammeranschluss (48.2) und einen sechsten Kammeranschluss (48.3) umfasst, wobei der zweite Ventilkörper (44) in einer Lehrlaufposition den vierten und den fünften Kammeranschluss (48.1, 48.2) in Verbindung setzt und in einer angehobenen Position den fünften und den sechsten Kammeranschluss (48.2, 48.3) in Verbindung setzt.

13. Ventilvorrichtung (1) nach Anspruch 8, 9 und 12, wobei:
der erste Kammeranschluss (46.1) mit dem ersten Vorsteuerventil (38) verbunden ist und den zweiten Steuerdruck (p2) empfängt;
der zweite Kammeranschluss (46.2) mit dem Arbeitssteueranschluss (33.4) verbunden ist; und
der dritte Kammeranschluss (46.3) mit der Versorgungsverbindung (6) verbunden ist.

14. Ventilvorrichtung (1) nach den Ansprüchen 8, 10, 12, wobei:
der vierte Kammeranschluss (48.1) mit dem zweiten Vorsteuerventil (40) verbunden ist, um den dritten Steuerdruck (p3) an das zweite Vorsteuerventil (40) bereitzustellen;
der fünfte Kammeranschluss (48.2) mit dem mindestens ersten pneumatisch betätigbaren Halteventil (34) zum Bereitstellen eines Haltedrucks (pH) dort verbunden ist; und
der sechste Kammeranschluss (48.3) mit der oder einer Entlüftungsverbindung (5) verbunden ist.

15. Ventilvorrichtung (1) nach einem der vorstehenden Ansprüche, umfassend eine entsperrbare Verriegelungsvorrichtung (50), die durch die elektrische Vorsteuereinheit (12) entsperrbar ist.

16. Ventilvorrichtung (1) nach Anspruch 9 und 15, wobei die entsperrbare Verriegelungsvorrichtung (50) ein Entsperrventil (52) umfasst, das mit dem ersten Vorsteuerventil (38) zum Empfangen des zweiten Steuerdrucks (p2) verbunden ist.

17. Ventilvorrichtung (1) nach mindestens einem der vorstehenden Ansprüche, umfassend eine elektronische Steuervorrichtung mit einem Mikroprozessor und mit einem Programmspeicher, in dem ein Steuerprogramm gespeichert ist, wobei die elektronische Steuervorrichtung zum Steuern eines Luftfederungssystems eingerichtet ist, das für ein Fahrzeug geeignet ist, mittels der Ventilvorrichtung (1).

18. Verfahren zum Steuern eines Luftfederungssystems, das für ein Fahrzeug geeignet ist, mittels einer Ventilvorrichtung (1) nach mindestens einem der Ansprüche 1 bis 16, umfassend die folgenden Schritte:
(a) Empfangen eines Sensorsignals (SR1, SR2, SR3) an einer Steuervorrichtung (30), wobei das Sensorsignal eine der Positionen (R1, R2, R3) anzeigt, und
(b) Bereitstellen eines entsprechenden Signals an einen Fahrer.

## Revendications

1. Dispositif de soupape (1) pour commander un système de suspension à air de remorque (100), le dispositif de soupape (1) comprenant :
au moins une liaison de coussin (2, 4) pouvant être relié à un coussin à ressort pneumatique (102a, 102b, 102c, 104a, 104b, 104c) du système de suspension à air (100),
une liaison d'alimentation (6) pouvant être relié à un réservoir d'air comprimé (8), et
une liaison de ventilation (5) pouvant être relié à l'atmosphère,
dans lequel le dispositif de soupape (1) a une unité de soupape principale (10) à actionnement pneumatique, une unité de commande à pilote électrique (12) et une unité de commande à pilote manuelle (14), l'unité de commande à pilote électrique (12) et l'unité de commande à pilote manuelle (14) sont conçues pour fournir au moins une première pression pilote (p1) à ladite unité de soupape principale (10), dans lequel ladite unité de soupape principale (10) est conçue pour fournir au moins une pression de coussin (pC) au niveau de ladite liaison de coussin (2, 4) en fonction de la première pression pilote (p1),
dans lequel l'unité de commande à pilote manuelle (14) comprend un arbre à cames (16) à fonctionnement manuel pour commander au moins un premier corps de soupape (18), dans lequel ledit arbre à cames (16) est au moins rotatif dans une position d'entraînement (R1), une position d'abaissement (R2) et une position de levage (R3),
dans lequel le dispositif de soupape (1) a un capteur d'arbre (20) pour déterminer directement la position de rotation dudit arbre à cames (16),
dans lequel le dispositif de soupape (1) comprend une unité de commande électronique (30) reliée audit capteur d'arbre (20) et à ladite unité de commande à pilote électrique (12), dans lequel l'unité de commande électronique (30) comprend des moyens pour recevoir un signal de capteur (SR1, SR2, SR3) dudit capteur d'arbre (20) indiquant l'une des positions (R1, R2, R3),
dans lequel l'unité de commande électronique (30) comprend des moyens pour fournir au moins un premier signal de commutation (S1) correspondant au signal de capteur (SR1, SR2, SR3) à ladite unité de commande de pilote électrique (12),
**caractérisé en ce que** ledit arbre à cames (16) comprend une partie capteur (22), ladite partie capteur (22) comprenant une structure sensible (24), et
dans laquelle ladite structure sensible (24) comprend au moins une première, une deuxième et une troisième surface (26a, 26b, 26c), qui sont formées à différentes distances minimales du capteur d'arbre (20) et le capteur d'arbre (20) est adapté pour mesurer une distance par rapport auxdites première, deuxième et troisième surfaces (26a, 26b, 26c).

2. Dispositif de soupape (1) selon la revendication 1, dans lequel ladite structure sensible (24) est formée au niveau d'une face d'extrémité axiale (21).

3. Dispositif de soupape (1) selon l'une des revendications précédentes, dans lequel ledit capteur d'arbre (20) est un capteur optique.

4. Dispositif de soupape (1) selon la revendication 1 ou 2, dans lequel ledit capteur d'arbre (20) est un capteur capacitif.

5. Dispositif de soupape (1) selon la revendication 1 ou 2, dans lequel ledit capteur d'arbre (20) est un capteur magnétique.

6. Dispositif de soupape (1) selon l'une quelconque des revendications précédentes, dans lequel ladite unité de soupape principale (10) comprend une soupape de travail (32) et au moins une première soupape de maintien à actionnement pneumatique (34).

7. Dispositif de soupape (1) selon la revendication 6, dans lequel ladite unité de soupape principale (10) comprend une seconde soupape de maintien à actionnement pneumatique (36).

8. Dispositif de soupape (1) selon la revendication 6 ou 7, dans lequel ladite soupape de travail (32) est formée comme une soupape à 3/2 voies (33) comprenant un premier orifice de soupape de travail (33.1) relié à la liaison d'alimentation (6), un deuxième orifice de soupape de travail (33.2), relié à l'au moins première soupape de maintien à actionnement pneumatique (34), un troisième orifice de soupape de travail (33.4) relié à la liaison de ventilation (5), et un orifice de commande de travail (33.4) pour recevoir la première pression de pilotage (p1) de l'unité de commande de pilotage (12) et/ou de ladite unité de commande à pilotage manuelle (14).

9. Dispositif de soupape (1) selon l'une quelconque des revendications précédentes, dans lequel ladite unité de commande à pilote électrique (12) comprend une première soupape pilote (38) pour fournir une seconde pression pilote (p2) à ladite unité de commande à pilote manuelle (14).

10. Dispositif de soupape (1) selon l'une quelconque des revendications précédentes, dans lequel ladite unité de commande à pilote électrique (12) comprend une seconde soupape pilote (40) pour recevoir une troisième pression pilote (p3) de ladite unité de commande à pilote manuelle (14) et fournir ladite première pression pilote (p1) à ladite unité de soupape principale (10).

11. Dispositif de soupape (1) selon l'une quelconque des revendications précédentes, dans lequel ladite unité de commande à pilote manuelle (14) comprend un carter de soupape (42), où ledit premier corps de soupape (18), un second corps de soupape (44) et ledit arbre à cames (16) sont disposés.

12. Dispositif de soupape (1) selon la revendication 11, dans lequel lesdits premier et second corps de soupape (18, 44) sont individuellement mobiles dans une première et une seconde chambre de soupape (46, 48) respectivement ;
dans lequel ladite première chambre de soupape (46) comprend un premier orifice de chambre (46.1), un deuxième orifice de chambre (46.2) et un troisième orifice de chambre (46.3), dans lequel le premier corps de soupape (18) dans une position de repos place les premier et deuxième orifices de chambre (46.1, 46.2) en liaison et, dans une position relevée, place les deuxième et troisième orifices de chambre (46.2, 46.3) en liaison ; et
dans lequel ladite seconde chambre de soupape (48) comprend un quatrième orifice de chambre (48.1), un cinquième orifice de chambre (48.2) et un sixième orifice de chambre (48.3), dans lequel le second corps de soupape (44) dans une position de repos place les quatrième et cinquième orifices de chambre (48.1, 48.2) en liaison et, dans une position relevée, place les cinquième et sixième orifices de chambre (48.2, 48.3) en liaison.

13. Dispositif de soupape (1) selon la revendication 8, 9 ou 12, dans lequel :
ledit premier orifice de chambre (46.1) est relié à la première soupape pilote (38) et reçoit ladite seconde pression pilote (p2) ;
ledit deuxième orifice de chambre (46.2) est relié audit orifice de commande de travail (33.4) ; et
ledit troisième orifice de chambre (46.3) est relié à ladite liaison d'alimentation (6).

14. Dispositif de soupape (1) selon les revendications 8, 10, 12 dans lequel :
ledit quatrième orifice de chambre (48.1) est relié à ladite seconde soupape pilote (40) pour fournir la troisième pression pilote (p3) à la seconde soupape pilote (40) ;
ledit cinquième orifice de chambre (48.2) est relié à ladite au moins première soupape de maintien (34) à actionnement pneumatique pour fournir une pression de maintien (pH) à celle-ci ; et
ledit sixième orifice de chambre (48.3) est relié à la ou à une liaison de ventilation (5).

15. Dispositif de soupape (1) selon l'une quelconque des revendications précédentes, comprenant un dispositif d'encliquetage déverrouillable (50) qui peut être déverrouillé par l'unité de commande du pilote électrique (12).

16. Dispositif de soupape (1) selon les revendications 9 et 15, dans lequel ledit dispositif d'encliquetage déverrouillable (50) comprend une soupape de déverrouillage (52) reliée à ladite première soupape pilote (38) pour recevoir la seconde pression pilote (p2).

17. Dispositif de soupape (1) selon au moins l'une des revendications précédentes, comprenant un dispositif de commande électronique avec un microprocesseur et avec une mémoire de programme où un programme de commande est stocké, le dispositif de commande électronique étant configuré pour commander un système de suspension à air adapté à un véhicule au moyen du dispositif de soupape (1).

18. Procédé de commande d'un système de suspension à air adapté à un véhicule au moyen d'un dispositif de soupape (1) selon au moins l'une des revendications 1 à 16, comprenant les étapes suivantes :
(a) recevoir un signal de capteur (SR1, SR2, SR3) au niveau d'un dispositif de commande (30), ledit signal de capteur indiquant l'une des positions (R1, R2, R3), et
(b) fournir un signal correspondant à un conducteur.
